# EUROPEAN PATENT APPLICATION

(11) **EP 4 611 066 A1**
(43) Date of publication of application: **03.09.2025**
(21) Application number: 22963366.4
(22) Date of filing: 27.10.2022
(51) Int. Cl.: H01M 4/38, H01M 4/134, H01M 4/36, H01M 10/0562

(54) **SECONDARY BATTERY**

(71) Applicant: Nissan Motor Co., Ltd., Kanagawa 221-0023 (JP); Renault s.a.s, 92100 Boulogne Billancourt (FR)
(72) Inventor: MISHINA, Takuya, Atsugi-shi, Kanagawa 243-0123 (JP); TAKADA, Harumi, Atsugi-shi, Kanagawa 243-0123 (JP); MATSUNO, Tomohisa, Atsugi-shi, Kanagawa 243-0123 (JP)
(74) Representative: Grünecker Patent- und Rechtsanwälte PartG mbB
(86) International application number: PCT/IB2022/000624
(87) International publication number: WO 2024/089445

(57) **Abstract**

To provide a means capable of reducing direct current resistance in a secondary battery of lithium-deposit type having a negative electrode intermediate layer including metal particles. A secondary battery comprising: a power generation element having a positive electrode having a positive electrode active material layer containing a positive electrode active material capable of storing and releasing lithium ions disposed on a surface of a positive electrode current collector, a negative electrode having a negative electrode current collector and lithium metal deposited on the negative electrode current collector during charging, a solid electrolyte layer intervening between the positive electrode and the negative electrode and containing a solid electrolyte, and a negative electrode intermediate layer intervening between the negative electrode current collector and the solid electrolyte layer and containing metal particles made of at least one metal material; wherein a molar percentage of oxygen present on the surface of the metal particles, as determined by X-ray photoelectron spectroscopy, is more than 2 mol% and less than 88 mol% with respect to 100 mol% of total atoms, is provided.

## Description

### TECHNICAL FIELD

The present invention relates to a secondary battery.

### BACKGROUND ART

In recent years, research and development on an all-solid-state secondary battery using an oxide-based or sulfide-based solid electrolyte as an electrolyte have been actively performed. The solid electrolyte is a material mainly containing an ion conductor capable of ion conduction in a solid. For this reason, in the all-solid-state secondary battery, there is an advantage that various problems caused by a combustible organic electrolyte solution do not occur in principle as in a conventional liquid-based secondary battery using a nonaqueous electrolyte.

As one type of the all-solid-state secondary battery, a so-called lithium-deposit type in which lithium metal is deposited on a negative electrode current collector in a charging process is known. In such an all-solid-state secondary battery of lithium-deposit type, it is known that lithium metal deposited in a charging process is ionized in a discharging process, thereby generating voids in the lithium metal, which may decrease a discharge capacity. Therefore, for the purpose of suppressing generation of such voids, to the all-solid-state secondary battery of lithium-deposit type, a restraint pressure is generally applied in a laminating direction of the battery.

JP 2020-191202 A discloses a technique of providing a negative electrode active material layer (negative electrode intermediate layer) containing Ag between a negative electrode current collector and a solid electrolyte layer. With such a configuration, Li is deposited as a Li (Ag) alloy in which Ag is solid-solved in a charging process. Then, only Li is dissolved from the Li (Ag) alloy in a discharging process, the solid-solved Ag remains, and therefore generation of voids can be suppressed.

### SUMMARY OF INVENTION

### Technical Problem

However, as a result of studies by the present inventors, it has been found that a secondary battery of lithium-deposit type having a negative electrode intermediate layer containing metal particles such as Ag may have a problem of high direct current resistance.

Therefore, an object of the present invention is to provide a means capable of reducing direct current resistance in a secondary battery of lithium-deposit type having a negative electrode intermediate layer containing metal particles.

### Solution to Problem

One embodiment of the present invention relates to a secondary battery including a power generation element including: a positive electrode having a positive electrode active material layer containing a positive electrode active material capable of storing and releasing lithium ions disposed on a surface of a positive electrode current collector; a negative electrode having a negative electrode current collector and lithium metal deposited on the negative electrode current collector during charging; a solid electrolyte layer intervening between the positive electrode and the negative electrode and containing a solid electrolyte; and a negative electrode intermediate layer intervening between the negative electrode current collector and the solid electrolyte layer and containing metal particles made of at least one metal material. In the secondary battery, a molar percentage of oxygen present on the surface of the metal particles, as determined by X-ray photoelectron spectroscopy, is more than 2 mol% and less than 88 mol% with respect to 100 mol% of total atoms.

### BRIEF DESCRIPTION OF DRAWINGS

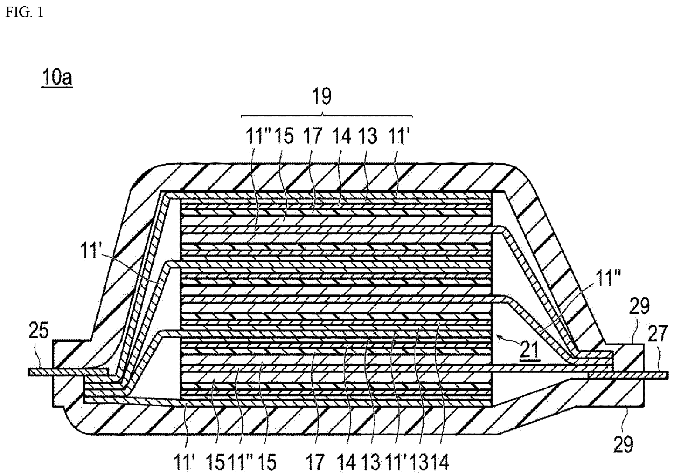

Fig. 1 is a cross-sectional view schematically illustrating an overall structure of a laminated type (internal parallel connection type) all-solid-state lithium secondary battery (laminated type secondary battery) according to an embodiment of the present invention.

### DESCRIPTION OF EMBODIMENTS

One embodiment of the present invention relates to a secondary battery including a power generation element including: a positive electrode having a positive electrode active material layer containing a positive electrode active material capable of storing and releasing lithium ions disposed on a surface of a positive electrode current collector; a negative electrode having a negative electrode current collector and lithium metal deposited on the negative electrode current collector during charging; a solid electrolyte layer intervening between the positive electrode and the negative electrode and containing a solid electrolyte; and a negative electrode intermediate layer intervening between the negative electrode current collector and the solid electrolyte layer and containing metal particles made of at least one metal material. In the secondary battery, a molar percentage of oxygen present on the surface of the metal particles, as determined by X-ray photoelectron spectroscopy, is more than 2 mol% and less than 88 mol% with respect to 100 mol% of total atoms. According to the secondary battery according to the present embodiment, direct current resistance can be reduced in a secondary battery of lithium-deposit type having a negative electrode intermediate layer containing metal particles.

Hereinafter, the secondary battery according to the present embodiment will be described with reference to the attached drawing. Note that a technical scope of the present invention should be determined based on claims, and is not limited only to the following embodiment.

Fig. 1 is a cross-sectional view schematically illustrating an overall structure of a laminated type (internal parallel connection type) all-solid-state lithium secondary battery (hereinafter, also simply referred to as a "laminated type secondary battery") according to an embodiment of the present invention. Note that Fig. 1 illustrates a cross section of a laminated type secondary battery during charging. In a laminated type secondary battery 10a illustrated in Fig. 1, a substantially rectangular power generation element 21 in which a charge/discharge reaction proceeds actually is sealed in a laminate film 29 serving as a battery outer casing body. Here, the power generation element 21 has a configuration in which a negative electrode, a solid electrolyte layer 17, and a positive electrode are laminated. The negative electrode has a structure in which a negative electrode current collector 11', a negative electrode active material layer 13 made of lithium metal deposited on a surface of the negative electrode current collector 11', and a negative electrode intermediate layer 14 containing zinc nanoparticles and carbon black disposed between the negative electrode active material layer 13 and the solid electrolyte layer 17 are laminated. In the positive electrode, a positive electrode active material layer 15 is disposed on a surface of a positive electrode current collector 11". The negative electrode, the solid electrolyte layer, and the positive electrode are laminated in this order such that the negative electrode intermediate layer 14 faces the positive electrode active material layer 15 adjacent thereto through the solid electrolyte layer 17. In this way, the negative electrode, the solid electrolyte layer, and the positive electrode adjacent to each other form one single battery layer 19. Therefore, it can be said that the laminated type secondary battery 10a illustrated in Fig. 1 has a configuration in which a plurality of the single battery layers 19 are laminated to be electrically connected in parallel. The laminated type secondary battery 10a has a structure in which a negative electrode current collecting plate 25 and a positive electrode current collecting plate 27 conductive with the electrodes (negative electrode and positive electrode) are attached to the negative electrode current collector 11' and the positive electrode current collector 11", respectively, and the negative electrode current collecting plate 25 and the positive electrode current collecting plate 27 are each led to the outside of the laminate film 29 so as to be sandwiched between ends of the laminate film 29. A restraint pressure is applied to the laminated type secondary battery 10a in a laminating direction of the power generation element 21 by a pressurizing member (not illustrated). Therefore, the volume of the power generation element 21 is kept constant.

Hereinafter, main components of the all-solid-state battery according to the present embodiment will be described.

### [Current collector]

The current collector (negative electrode current collector and positive electrode current collector) has a function of mediating transfer of electrons from the electrode active material layer. A material constituting the current collector is not particularly limited. As the material constituting the current collector, for example, a metal such as aluminum, nickel, iron, stainless steel, titanium, or copper, or a resin having conductivity can be adopted. The thickness of the current collector is not particularly limited, but is, for example, 10 to 100 µm.

### [Negative electrode active material layer]

The all-solid-state battery according to the present embodiment is of a so-called lithium-deposit type in which lithium metal is deposited on a negative electrode current collector in a charging process. A layer made of lithium metal deposited on the negative electrode current collector in this charging process is the negative electrode active material layer of the lithium secondary battery according to the present embodiment. Therefore, the thickness of the negative electrode active material layer increases with a progress of the charging process, and the thickness of the negative electrode active material layer decreases with a progress of a discharging process. The negative electrode active material layer does not have to be present at the time of full discharge, but in some cases, the negative electrode active material layer made of a certain amount of lithium metal may be disposed at the time of full discharge. The thickness of the negative electrode active material layer (lithium metal layer) at the time of full charge is not particularly limited, but is usually 0.1 to 1000 µm.

### [Negative electrode intermediate layer]

The negative electrode intermediate layer is a layer intervening between the negative electrode active material layer and the solid electrolyte layer, and contains metal particles made of at least one metal material. The metal particles can contribute to uniformly depositing lithium metal on a surface of the current collector.

The metal material is not particularly limited, and any of a metal and an alloy that can be alloyed with lithium and a metal that is not alloyed with lithium can be used. Examples of the metal that can be alloyed with lithium include indium (In), aluminum (Al), silicon (Si), tin (Sn), magnesium (Mg), gold (Au), silver (Ag), and zinc (Zn), and examples of the metal that is not alloyed with lithium include nickel (Ni), copper (Cu), and the like. Examples of the alloy that can be alloyed with lithium include an alloy containing at least one of the above-described metals that can be alloyed with lithium. Among these, the metal material preferably contains at least one of Ag, Mg, Zn, Ni, and Al, and more preferably contains at least one of Ag, Mg, and Zn from a viewpoint of further reducing direct current resistance of the secondary battery. In addition, the metal material still more preferably contains at least one of Mg and Zn from a viewpoint of cost reduction. According to an embodiment, the metal material is preferably at least one of Ag particles, Mg particles, Zn particles, Ni particles, and Al particles, more preferably at least one of Ag particles, Mg particles, and Zn particles, still more preferably at least one of Mg particles and Zn particles, and particularly preferably Mg particles or Zn particles.

In the secondary battery of the present embodiment, a molar percentage of oxygen present on the surface of the metal particles (hereinafter, also referred to as "amount of oxygen on the surface of the metal particles"), as determined by X-ray photoelectron spectroscopy, is more than 2 mol% and less than 88 mol% with respect to 100 mol% of total atoms. A value of the molar percentage is preferably 10 mol% or more and 81 mol% or less, 12 mol% or more and 81 mol% or less, more than 15 mol% and less than 70 mol%, or 20 mol% or more and 61 mol% or less in this order. A detailed mechanism in which the direct current resistance in the secondary battery is reduced by controlling the amount of oxygen on the surface of the metal particles within the above range is not clear, but the present inventors presume the mechanism as follows. Note that the following mechanism is merely presumption, and the technical scope of the present invention is not limited by this. When the molar percentage of oxygen exceeds 2 mol%, diffusibility of lithium is improved due to a change in properties of the metal surface. Thereby, a lithium deposition reaction area increases, and lithium deposition reaction resistance decreases. As a result, direct current resistance in the negative electrode intermediate layer decreases, and direct current resistance of the entire secondary battery may thereby decrease. On the other hand, when the molar percentage of oxygen is too large, a lithium surface is oxidized by oxygen present on the metal surface to generate lithium oxide (LiO₂). When LiO₂ is present on the lithium surface, surface tension and viscosity of lithium increase, and diffusibility of lithium on the metal surface decreases. Thereby, a lithium deposition reaction area decreases, and lithium deposition reaction resistance increases. When the molar percentage of oxygen is less than 88 mol%, such an adverse influence caused by oxidation of the lithium surface can be prevented. As a result, direct current resistance in the negative electrode intermediate layer decreases, and direct current resistance of the entire secondary battery may thereby decrease.

Note that, as described in Examples described later, the molar percentage of oxygen present on a surface of metal particles as a raw material of the negative electrode intermediate layer (that is, before the negative electrode intermediate layer is prepared) is the same as the molar percentage of oxygen present on a surface of metal particles contained in the negative electrode intermediate layer in the secondary battery. Therefore, by controlling the molar percentage of oxygen present on the surface of the metal particles as a raw material of the negative electrode intermediate layer within a predetermined range, it is possible to manufacture the secondary battery of the present embodiment.

Hereinafter, the molar percentage of oxygen present on the surface of the metal particles as a raw material of the negative electrode intermediate layer will be described. For example, a metal having a relatively large ionization tendency, such as indium (In), aluminum (Al), silicon (Si), tin (Sn), magnesium (Mg), zinc (Zn), or nickel (Ni), is easily oxidized, and thus a metal oxide is usually present on a surface of metal particles of these metals. Therefore, by appropriately subjecting these metal particles to a reduction treatment to decrease the amount of oxygen on the surface of the metal particles, it is possible to control the amount of oxygen within a predetermined range. Examples of the reduction treatment include a heat treatment under vacuum conditions. If necessary, a reducing agent such as a carbon material may be used. On the other hand, a metal having a small ionization tendency, such as gold (Au) or silver (Ag), is hardly oxidized, and thus a metal oxide is usually hardly present (or not present) on a surface of metal particles of these metals. Therefore, by appropriately subjecting these metal particles to an oxidation treatment to increase the amount of oxygen on the surface of the metal particles, it is possible to control the amount of oxygen within a predetermined range. Examples of the oxidation treatment include a heat treatment in an air atmosphere. Note that specific conditions of the reduction treatment or the oxidation treatment can be appropriately set by a person skilled in the art according to the type, size, and amount of the metal particles to be subjected to the treatment, a target value of the molar percentage of oxygen on the surface of the metal particles, and the like.

The average particle diameter of the metal particles is not particularly limited, but is preferably 10 nm or more and 1 µm or less, and more preferably 20 nm or more and 800 nm or less. Note that, in the present specification, the average particle diameter of the metal particles refers to a 50% cumulative diameter (D50) for particle diameters (maximum distance among distances between any two points on a contour line of an observed particle) of 50 particles measured by observation with a scanning electron microscope (SEM).

The negative electrode intermediate layer can further contain carbon particles as necessary in addition to the metal particles described above. The carbon particles can contribute to suppressing generation and growth of dendrite. Specific examples of the carbon material include carbon black (specifically, acetylene black, Ketjen black (registered trademark), furnace black, channel black, thermal lamp black, and the like), carbon nanotube (CNT), graphite, hard carbon, and the like. Among these materials, carbon black is preferable, and at least one selected from the group consisting of acetylene black, Ketjen black (registered trademark), furnace black, channel black, and thermal lamp black is more preferable.

When the metal particles and the carbon particles are used in combination, a blending ratio (mass ratio) therebetween is not particularly limited, but the ratio of metal particles : carbon particles is preferably 10 : 1 to 1 : 1, and more preferably 5 : 1 to 2 : 1. When the metal particles and the carbon particles are used in combination, a volume-based blending ratio (volume ratio) therebetween is also not particularly limited, but the ratio of metal particles : carbon particles is preferably 1 : 99 to 30 : 70, and more preferably 5 : 95 to 25 : 75.

The content of the metal particles and the carbon particles that can be contained as necessary in the negative electrode intermediate layer (when two or more types of materials are used in combination, the content refers to the total content thereof, and the same applies hereinafter) is not particularly limited, but is preferably within a range of 50 to 100 mass%, more preferably within a range of 70 to 100 mass%, still more preferably within a range of 85 to 100 mass%, and particularly preferably within a range of 90 to 99 mass%.

The negative electrode intermediate layer may be formed of only metal particles or a mixture of metal particles and carbon particles as long as a free-standing film can be prepared with only metal particles or a mixture of metal particles and carbon particles, but may contain a binder as necessary. The type of the binder is not particularly limited, and those known in the present technical field can be appropriately adopted. Examples thereof include polyvinylidene fluoride (PVDF) (including a compound in which a hydrogen atom is replaced with another halogen element), polytetrafluoroethylene (PTFE), styrene-butadiene rubber (SBR), and carboxymethyl cellulose.

The content of the binder in the negative electrode intermediate layer is not particularly limited, but is preferably within a range of 1 to 15 mass%, and more preferably within a range of 5 to 10 mass%. When the content of the binder is 1% by mass or more, a negative electrode intermediate layer having sufficient strength can be formed. When the content of the binder is 15 mass% or less, a negative electrode intermediate layer having sufficient lithium ion conductivity can be formed.

The thickness of the negative electrode intermediate layer is not particularly limited, but is preferably 1 to 50 µm, more preferably 5 to 40 µm, and still more preferably 10 to 30 µm. When the thickness of the negative electrode intermediate layer is 1 µm or more, a function of the negative electrode intermediate layer can be sufficiently exhibited. When the thickness of the negative electrode intermediate layer is 50 µm or less, a decrease in energy density can be suppressed.

### [Solid electrolyte layer]

The solid electrolyte layer intervenes between the negative electrode and the positive electrode, and contains a solid electrolyte (usually as a main component). The solid electrolyte contained in the solid electrolyte layer is not particularly limited, and those known in the present technical field can be appropriately adopted. Examples thereof include sulfide solid electrolytes such as LPS(Li₂S-P₂S₅), Li₆PS₅X (in which X is Cl, Br or I), Li₇P₃S₁₁, Li_{3.2}P_{0.96}S, and Li₃PS₄. These sulfide solid electrolytes are preferably used because they have excellent lithium ion conductivity and can follow a volume change of an electrode active material due to charging and discharging because of their low volume elastic modulus.

The content of the solid electrolyte in the solid electrolyte layer is preferably 50 to 100 mass%, and more preferably 90 to 100 mass%.

The solid electrolyte layer may further contain a binder in addition to the solid electrolyte.

The thickness of the solid electrolyte layer varies depending on a configuration of a desired all-solid-state battery, but is usually 0.1 to 1000 µm, and preferably 10 to 40 µm.

### [Positive electrode active material layer]

The positive electrode active material layer essentially contains a positive electrode active material, and can contain a binder and a conductive aid as necessary.

The type of the positive electrode active material contained in the positive electrode active material layer is not particularly limited, but examples thereof include layered rock salt type active materials such as LiCoO₂, LiMnO₂, LiNiO₂, LiVO₂, and Li(Ni-Mn-Co)O₂, spinel type active materials such as LiMn₂O₄ and LiNi_{0.5}Mn_{1.5}O₄, olivine type active materials such as LiFePO₄ and LiMnPO₄, Si-containing active materials such as Li₂FeSiO₄ and Li₂MnSiO₄, and the like. Examples of the oxide active material other than those described above include Li₄Ti₅Oₗ₂. Among these materials, Li(Ni-Mn-Co)O₂ and a material obtained by replacing some of these transition metals with other elements (hereinafter, also simply referred to as "NMC composite oxide") are preferably used as the positive electrode active material.

Use of a sulfur-based positive electrode active material is also one of preferred embodiments. Examples of the sulfur-based positive electrode active material include particles or a thin film of an organic sulfur compound or an inorganic sulfur compound, and any material may be used as long as it can release lithium ions during charging and can store lithium ions during discharging by utilizing oxidation-reduction reaction of sulfur.

The content of the positive electrode active material in the positive electrode active material layer is preferably 50 to 100 mass%, more preferably 55 to 95 mass%, and still more preferably 60 to 90 mass%.

The thickness of the positive electrode active material layer varies depending on a configuration of a desired all-solid-state battery, but is usually 0.1 to 1000 µm, and preferably 10 to 40 µm.

Although an embodiment of the secondary battery of the present invention has been described above, the present invention is not limited only to the configuration described in the above-described embodiment, and can be appropriately changed based on the description of the claims.

Note that the following embodiments are also included in the scope of the present invention: the secondary battery according to claim 1, having the features of claim 2; the secondary battery according to claim 1, having the features of claim 3; the secondary battery according to claim 1, having the features of claim 4; the secondary battery according to claim 1, having the features of claim 5; the secondary battery according to any one of claims 1 to 5, having the features of claim 6; and the secondary battery according to any one of claims 1 to 6, having the features of claim 7.

### Examples

### <Preparation of metal particles>

### [Preparation of Zn particles a to j]

Zinc (Zn) particles (average particle diameter: 50 nm) as a raw material were put in a crucible, subjected to a reduction treatment at 300°C under a vacuum condition of 10³ Pa or less over the time described in Table 1 below, and then cooled to room temperature (25°C) to obtain each of Zn particles a to j.

### [Preparation of Ag particles a to c]

Silver (Ag) particles (average particle diameter: 60 nm) as a raw material were put in a crucible, subjected to an oxidation treatment at 80°C in an air atmosphere over the time described in Table 1 below, and then cooled to room temperature (25°C) to obtain each of Ag particles b and c. Note that silver (Ag) particles (average particle diameter: 60 nm) themselves as raw materials not subjected to the oxidation treatment were used as Ag particles a.

### [Preparation of Mg particles a to c]

Magnesium (Mg) particles (average particle diameter: 800 nm) as a raw material were put in a crucible, subjected to a reduction treatment at 300°C under a vacuum condition of 10³ Pa or less over the time described in Table 1 below, and then cooled to room temperature (25°C) to obtain each of Mg particles a to c.

### [Preparation of Ni particles a to c]

Nickel (Ni) particles (average particle diameter: 72 nm) as a raw material were put in a crucible, subjected to a reduction treatment at 300°C under a vacuum condition of 10³ Pa or less over the time described in Table 1 below, and then cooled to room temperature (25°C) to obtain each of Ni particles a to c.

### [Preparation of Al particles a to c]

Aluminum (Al) particles (average particle diameter: 70 nm) as a raw material were put in a crucible, subjected to a reduction treatment at 300°C under a vacuum condition of 10³ Pa or less over the time described in Table 1 below, and then cooled to room temperature (25°C) to obtain each of Al particles a to c.

### <Molar percentage of oxygen present on surface of metal particles>

Elemental composition of a surface (region having a depth of 0 to 5 nm) of each of the metal particles prepared above was analyzed using X-ray photoelectron spectroscopy under the following measurement conditions. Then, a ratio of oxygen to all elements was calculated as a molar percentage. The obtained values are presented in Table 1 below. Note that, for each of metal particles contained in a negative electrode intermediate layer in a test cell described later, the amount of oxygen on a surface of the metal particles was determined by a similar method to this method, and it was confirmed that the amount of oxygen was the same as the value described in Table 1.

### (Measurement conditions)

Device name: X-ray photoelectron spectrometer Quantum-2000 manufactured by ULVAC-PHI, Inc.
X-ray source: Monochromated Al Kα ray (1486.6 eV) 40 W
Photoelectron extraction angle: 45°
Measurement area: 200 µmφ.

### [Table 1]

**Table 1**

| | Treatment conditions | Treatment time (hours) | Amount of oxygen on surface of metal particles (mol%) |
|---|---|---|---|
| Zn particles a | 300°C Vacuum conditions | 100 | 2 |
| Zn particles b | | 72 | 10 |
| Zn particles c | | 68 | 12 |
| Zn particles d | | 63 | 15 |
| Zn particles e | | 50 | 20 |
| Zn particles f | | 24 | 40 |
| Zn particles g | | 11 | 61 |
| Zn particles h | | 9 | 70 |
| Zn particles i | | 6 | 79 |
| Zn particles j | | 4 | 88 |
| Ag particles a | Not treated | 0 | 2 |
| Ag particles b | 80°C Air atmosphere | 18 | 44 |
| Ag particles c | | 55 | 80 |
| Mg particles a | 300°C Vacuum conditions | 72 | 10 |
| Mg particles b | | 51 | 56 |
| Mg particles c | | 23 | 81 |
| Ni particles a | 300°C Vacuum conditions | 72 | 10 |
| Ni particles b | | 12 | 51 |
| Ni particles c | | 3 | 80 |
| Al particles a | 300°C Vacuum conditions | 72 | 10 |
| Al particles b | | 32 | 55 |
| Al particles c | | 9 | 80 |

### <Preparation Example of test cell>

### [Comparative Example 1]

### (Preparation of negative electrode intermediate layer)

Zn particles a and carbon black nanoparticles were weighed so as to have a volume ratio of 7 : 93, and mixed. To 93 parts by mass of the obtained mixture, 7 parts by mass of polyvinylidene fluoride (PVDF) as a binder was added, and N-methyl-2-pyrrolidone (NMP) was added thereto as a solvent and mixed to prepare a negative electrode intermediate layer slurry. The negative electrode intermediate layer slurry was applied to a surface of a stainless foil as a negative electrode current collector and dried to obtain a negative electrode intermediate layer. The obtained laminate was punched to a diameter of 10 mm to obtain a negative electrode intermediate layer (thickness: 10 µm) formed on the negative electrode current collector.

### (Preparation of test cell)

Preparation of a test cell was performed in a glove box in an argon atmosphere with a dew point of - 68°C or lower. A stainless steel cylindrical protruding punch (10 mm diameter) was inserted into one side of a cylindrical tube jig (tube inner diameter: 10 mm, outer diameter: 23 mm, height: 20 mm) made of Macor, and 80 mg of an argyrodite type sulfide solid electrolyte (Li₆PS₅Cl manufactured by Ampcera) was put from an upper side of the cylindrical tube jig. Thereafter, another stainless steel cylindrical protruding punch was inserted therein to sandwich the solid electrolyte between the punches, and the solid electrolyte was pressed at a pressure of 75 MPa for three minutes using a hydraulic press to form a solid electrolyte layer having a diameter of 10 mm and a thickness of about 0.6 mm in the cylindrical tube jig. Next, the cylindrical protruding punch inserted from the upper side was once removed, and a lithium foil (thickness: 200 µm, diameter: 8 mm) as a counter electrode was put on one side surface of the solid electrolyte layer in the cylindrical tube. Next, the cylindrical protruding punch on the lower side was removed, and the negative electrode intermediate layer formed on the negative electrode current collector prepared as described above was inserted such that an exposed surface of the negative electrode intermediate layer faced the solid electrolyte layer, and was restrained with a metal housing at a pressure corresponding to 100 MPa. As described above, a test cell (all-solid-state lithium secondary battery) of the present Comparative Example in which the negative electrode current collector, the negative electrode intermediate layer, the solid electrolyte layer, the counter electrode Li, and the current collector (punch) were laminated in this order was prepared.

### [Examples 1 to 19 and Comparative Examples 2 and 3]

Test cells of Examples 1 to 19 and Comparative Examples 2 and 3 were prepared in a similar manner to that in Comparative Example 1 except that the type of metal particles used in the above (Preparation of negative electrode intermediate layer) was changed to those presented in Table 2 below.

### <Direct current resistance (DCR)>

Charging and discharging were performed at a current density of each of 6.24 mA•cm⁻², 12.5 mA•cm⁻², 18.7 mA•cm⁻², and 31.2 mA•cm⁻² under a condition of 25°C while a restraint pressure of 6 MPa was applied to a test cell using a pressurizing member in a laminating direction, and a voltage of SOC50% at the time of third discharging was measured. For the obtained results, a plot was created with the horizontal axis representing a current (A) and the vertical axis representing a voltage (V), and resistance R (Ω) was determined from a slope of a regression line of four points. By subtracting a sum (14.3 Q) of the resistance values obtained in advance for the solid electrolyte layer and the counter electrode Li from the obtained resistance R (Ω), a resistance value of the negative electrode intermediate layer was calculated. Direct current resistance (DCR) (Ω•cm²) was calculated from a product of the obtained resistance value (Ω) of the negative electrode intermediate layer and an electrode area (0.785 cm²). Results thereof are presented in Table 2 below.

### [Table 2]

**Table 2**

| | Metal particles | Amount of oxygen on surface of metal particles (mol%) | DCR (Ω·cm²) |
|---|---|---|---|
| Comparative Example 1 | Zn particles a | 2 | 16 |
| Example 1 | Zn particles b | 10 | 11 |
| Example 2 | Zn particles c | 12 | 9 |
| Example 3 | Zn particles d | 15 | 7 |
| Example 4 | Zn particles e | 20 | 6 |
| Example 5 | Zn particles f | 40 | 5 |
| Example 6 | Zn particles g | 61 | 6 |
| Example 7 | Zn particles h | 70 | 7 |
| Example 8 | Zn particles i | 79 | 9 |
| Comparative Example 2 | Zn particles j | 88 | 12 |
| Comparative Example 3 | Ag particles a | 2 | 16 |
| Example 9 | Ag particles b | 44 | 5 |
| Example 10 | Ag particles c | 80 | 8 |
| Example 11 | Mg particles a | 10 | 5 |
| Example 12 | Mg particles b | 56 | 2 |
| Example 13 | Mg particles c | 81 | 4 |
| Example 14 | Ni particles a | 10 | 12 |
| Example 15 | Ni particles b | 51 | 6 |
| Example 16 | Ni particles c | 80 | 10 |
| Example 17 | Al particles a | 10 | 16 |
| Example 18 | Al particles b | 55 | 8 |
| Example 19 | Al particles c | 80 | 12 |

From the results in Table 2, it can be seen that, according to the present invention, direct current resistance can be reduced in a secondary battery of lithium-deposit type having a negative electrode intermediate layer containing metal particles.

Comparison of Comparative Examples 1 and 2 and Examples 1 to 8 indicates that an effect of reducing the direct current resistance is particularly excellent by controlling the amount of oxygen on the Zn particle surface within a range of more than 15 mol% and less than 70 mol%. Such a correlation between the amount of oxygen on the surface of the metal particles and the direct current resistance was similarly observed for metal particles other than the Zn particles.

In addition, from the results in Table 2, it is found that the direct current resistance is further reduced in the particles of Mg, Zn, and Ag among the metal particles.

### Reference Signs List

- 10a: Laminated type secondary battery
- 11': Negative electrode current collector
- 11": Positive electrode current collector
- 13: Negative electrode active material layer
- 14: Negative electrode intermediate layer
- 15: Positive electrode active material layer
- 17: Solid electrolyte layer
- 19: Single battery layer
- 21: Power generation element
- 25: Negative electrode current collecting plate
- 27: Positive electrode current collecting plate
- 29: Laminate film

## Claims

1. A secondary battery comprising a power generation element comprising:
a positive electrode having a positive electrode active material layer containing a positive electrode active material capable of storing and releasing lithium ions disposed on a surface of a positive electrode current collector;
a negative electrode having a negative electrode current collector and lithium metal deposited on the negative electrode current collector during charging;
a solid electrolyte layer intervening between the positive electrode and the negative electrode and containing a solid electrolyte; and
a negative electrode intermediate layer intervening between the negative electrode current collector and the solid electrolyte layer and containing metal particles made of at least one metal material, wherein
a molar percentage of oxygen present on a surface of the metal particles, as determined by X-ray photoelectron spectroscopy, is more than 2 mol% and less than 88 mol% with respect to 100 mol% of total atoms.

2. The secondary battery according to claim 1, wherein the metal material is at least one selected from the group consisting of a metal and an alloy capable of being alloyed with lithium, and nickel.

3. The secondary battery according to claim 1, wherein the molar percentage is 10 mol% or more and 81 mol% or less.

4. The secondary battery according to claim 1, wherein the molar percentage is 12 mol% or more and 81 mol% or less.

5. The secondary battery according to claim 1, wherein the molar percentage is more than 15 mol% and less than 70 mol%.

6. The secondary battery according to claim 1 or 2, wherein the metal material contains at least one of silver, magnesium, zinc, nickel, and aluminum.

7. The secondary battery according to claim 1 or 2, wherein the metal material contains at least one of magnesium and zinc.
